# FASCICULE DE BREVET EUROPEEN

(11) **EP 2 564 981 B1**
(45) Date de publication et mention de la délivrance du brevet: **14.05.2014**
(21) Numéro de dépôt: 12177991.2
(22) Date de dépôt: 26.07.2012
(51) Int. Cl.: B23P 19/08

(54) **Système de mise en place de segment sur un piston de moteur à combustion interne**
Einbausystem eines Segments auf einen Motorkolben eines Verbrennungsmotors
System for placing a segment on a piston of an internal combustion engine

(30) Priorité: 02.09.2011 FR 1157784
(43) Date de publication de la demande: 06.03.2013
(73) Titulaire: PEUGEOT CITROËN AUTOMOBILES SA, 78140 Velizy-Villacoublay (FR)
(72) Inventeur: Trouillet, Norbert, 91430 IGNY (FR); Sonet, Alain, 60560 ORRY LA VILLE (FR); Mattarozzi, Cedric, 91430 IGNY (FR)

(56) Documents cités:
- EP-A1- 0 648 573
- FR-A1- 2 630 952
- JP-A- 2003 220 525
- US-A- 2 792 625

## Description

L'invention concerne l'assemblage des moteurs à combustion interne, et en particulier l'assemblage de segments sur un piston du moteur.

La segmentation d'un moteur à explosion a pour fonction d'assurer l'étanchéité du piston dans le cylindre. Les segments sont des pièces composées d'un cercle incomplet en acier élastique, prévues pour s'emboîter dans des gorges du piston. Le diamètre extérieur au repos est légèrement supérieur à celui du cylindre.

Le piston comporte généralement trois segments au niveau de sa partie haute :

Le segment de feu ou coupe-feu, qui est le plus proche de la chambre de combustion, permet à l'explosion du mélange de carburant d'imprimer une poussée maximale au piston, il arrête les gaz brûlants et réduit la température de la paroi du piston sous lui.

Le segment d'étanchéité assure le complément d'étanchéité des gaz de fuite passés à travers le segment de feu.

Le segment racleur sert à racler l'huile présente sur le cylindre sous le piston pour éviter qu'elle soit brûlée. Cette huile est projetée en permanence sur le cylindre par le mouvement des bielles, par le retour d'huile de lubrification de l'axe de piston ou par des gicleurs spéciaux projetant l'huile sur le piston pour le refroidir.

Les segments sont des pièces très minces et cassantes, fabriquées à partir d'un ressort d'acier élastique, coupé ensuite en rondelles constituant les segments. Les segments sont généralement asymétriques : il faut faire attention au sens de montage lors de l'assemblage du moteur.

Étant donnée l'importance du montage des segments dans le bon fonctionnement du moteur à combustion interne,le procédé de montage des segments est dorénavant automatisé.

Selon un premier procédé de montage connu, les segments sont disposés dans des colonnes et sont progressivement écartés, à l'aide d'un cône, jusqu'à leur mise en place dans le piston. Ce procédé tend à être abandonné, les fournisseurs de segments ayant constaté que l'expansion continue appliquée aux segments dans le cône peut dénaturer les propriétés mécaniques des segments.

Selon un deuxième procédé de montage connu et décrit dans le document FR2630952, une machine automatique assure la distribution des segments un par un. Cette machine est équipée d'un détrompage des différents types de segments, d'un approvisionnement continu en segments, d'un dispositif de changement de type de segments et d'un robot. Le robot est configuré pour prendre chaque piston, le disposer sur un poste d'initialisation muni d'une caméra identifiant un code barre sur celui-ci et fournissant une référence précise de hauteur. Le robot est également configuré pour récupérer chaque piston et le présenter successivement dans l'alésage d'une tulipe de mise en place de segments, en positionnant précisément la hauteur de la gorge dans laquelle le segment doit être déposé. Une lame pneumatique entraîne les segments entre l'alimentation et la tulipe de mise en place. Lors du déplacement d'un segment sur la tulipe, la tulipe assure son écartement.

La régulation du mouvement de la lame en vitesse et en efforts est difficile, ce qui induit en pratique des casses de segments lors de leur déplacement vers ou sur la tulipe. D'éventuels points durs lors du déplacement de la lame ne sont notamment pas détectés et peuvent induire des contraintes sur les segments induisant des amorces de rupture. Si une casse de segment n'est pas détectée durant l'assemblage, cette casse peut induire de graves dysfonctionnements du moteur.

Le document JP 2003 220525 A divulgue un système de mise en place de segments sur un piston selon le préambule de la revendication 1.

L'évolution constante des performances des moteurs et la réduction de leur consommation et de leurs niveaux de pollution induisent une redéfinition de la structure des segments. On constate que les segments sont de plus en plus fragiles et délicats à manipuler.

L'invention vise à résoudre un ou plusieurs de ces inconvénients.

L'invention porte ainsi sur un système de mise en place de segments sur un piston, comprenant :
- un dispositif de dépilage de segments ;
- un dispositif d'expansion du diamètre interne de segments ;
- un guide configuré pour guider un segment en translation entre le dispositif de dépilage et le dispositif d'expansion ;
- un dispositif d'entraînement configuré pour entraîner un segment dans le guide entre le dispositif de dépilage et le dispositif d'expansion ;
- un capteur de mesure de l'effort d'entraînement d'un segment par le dispositif d'entraînement ;
- un contrôleur configuré pour interrompre sélectivement l'entraînement du segment par le dispositif d'entraînement en fonction de l'effort d'entraînement mesuré par le capteur de mesure.

Selon une variante, le dispositif d'entraînement comprend un moteur électrique et un support entraîné en translation par rapport au guide par le moteur électrique.

Selon encore une variante, le dispositif d'entraînement comprend un support entraîné en translation par rapport au guide et une lame de poussée de segment entraînée en translation dans le guide par le support, le capteur de mesure de l'effort d'entraînement étant interposé entre la lame de poussée et le support pour mesurer l'effort d'entraînement selon la direction de guidage en translation du guide.

Selon une autre variante, le guide comporte une gorge de coulissement d'un segment, et comporte une gorge de coulissement du support accolée à la gorge de coulissement du segment, lesdites gorges s'étendant entre le dispositif de dépilage et le dispositif d'expansion.

Selon encore une autre variante, la lame de poussée est montée coulissante dans la gorge de coulissement du segment.

Selon une variante, le dispositif de dépilage est configuré pour introduire un segment dans ladite gorge.

Selon encore une variante, le guide comporte :
- au moins deux gorges superposées et destinées à guider en translation des segments respectifs ;
- au moins deux gorges de coulissement du support, chacune accolée à une gorge de coulissement de segment respective ;
- au moins deux lames de poussée montées coulissantes dans une gorge de coulissement d'un segment respective ;
- au moins deux capteurs de mesure de l'effort d'entraînement interposés entre une lame de poussée respective et le support selon la direction de guidage en translation du guide.

Selon une autre variante, une desdites lames est fixée sur le support par l'intermédiaire d'au moins deux desdits capteurs de mesure.

Selon encore une autre variante, le contrôleur interrompt l'entraînement par le dispositif d'entraînement lorsque l'effort d'entraînement mesuré dépasse un seuil prédéterminé.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un exemple de système de mise en place de segments sur un piston selon l'invention ;
- la figure 2 est une vue en coupe de côté du système de la figure 1 au niveau d'un dispositif d'entraînement des segments ;
- la figure 3 est une vue en coupe de côté de détails du dispositif d'entraînement du système ;
- la figure 4 est une vue en perspective de détails du dispositif d'entraînement du système ;
- la figure 5 est une vue de dessus d'un exemple de lame de poussée.

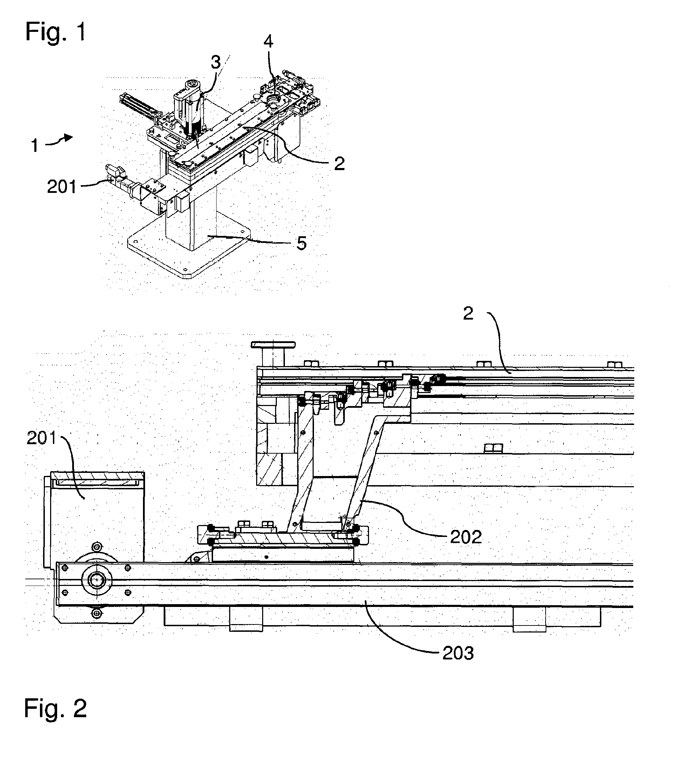

La figure 1 est une vue en perspective d'un mode de réalisation d'un système 1 de mise en place de segments sur un piston. Le système 1 comprend de façon connue en soi un dispositif de dépilage de segments 3, un dispositif d'expansion 4 du diamètre interne des segments pour leur mise en place sur un piston, et un guide 2 configuré pour guider au moins un segment en translation entre le dispositif de dépilage 3 et le dispositif d'expansion 4. Le dispositif de dépilage 3 et le dispositif d'expansion 4 sont des dispositifs automatisés présentant une structure connue en soi et ne seront donc pas détaillés davantage.

Le système 1 comprend un dispositif d'entraînement configuré pour entraîner un segment dans le guide 2 entre le dispositif de dépilage 3 et le dispositif d'expansion 4. Un capteur de mesure mesure l'effort d'entraînement d'un segment par le dispositif d'entraînement. Un contrôleur est configuré pour interrompre sélectivement l'entraînement du segment par le dispositif d'entraînement en fonction de l'effort d'entraînement mesuré par le capteur de mesure.

Ainsi, la présence d'un point dur ou d'une résistance excessive à la translation d'un segment dans le guide 2 sera détectée avant de générer une contrainte excessive sur le segment pouvant conduire à une casse ou une amorce de rupture d'un segment. Des segments relativement fragiles pourront ainsi être montés sur les pistons sans risque de défaillance.

Comme illustré à la figure 2, le dispositif d'entraînement comprend notamment un moteur électrique 201 (typiquement un moteur électrique à variateur) et un chariot formant support 202. Le chariot 202 est monté coulissant sur une table linéaire 203, selon un axe de translation identique à l'axe de translation des segments dans le guide 2. La table linéaire 203 est fixée sur un bâti 5. Le chariot 202 est entraîné en translation par rapport au guide 2 par l'intermédiaire du moteur 201.

L'utilisation d'un moteur électrique 201 pour assurer l'entraînement des segments permet avantageusement de réguler la vitesse de déplacement des segments et/ou l'effort de déplacement de ces segments.

Le chariot 202 supporte des lames de poussée de segments, montées dans des gorges respectives du guide 2. Les lames de poussée sont destinées à solliciter des segments à l'intérieur du guide 2 pour les entraîner jusqu'au dispositif d'expansion 4.

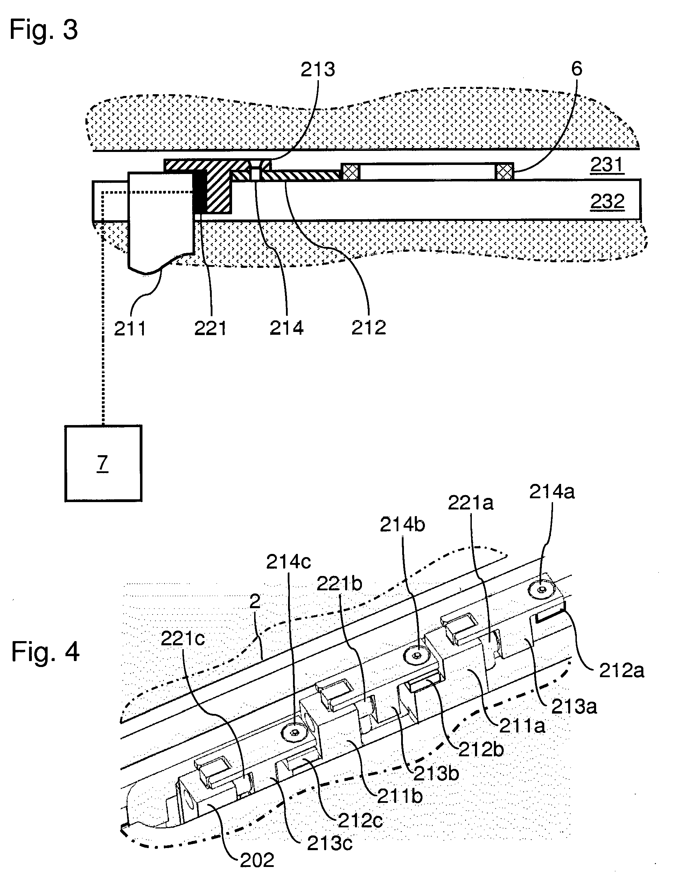

La figure 3 illustre plus précisément la structure du système 1 à l'intérieur du guide 2. Pour le guidage de chaque segment 6, le guide 2 comporte une gorge 231 configurée pour permettre le coulissement du segment 6 jusqu'au dispositif d'expansion 4. Une gorge 232 est accolée à la gorge 231 pour permettre le coulissement de composants du dispositif d'entraînement. Les gorges 231 et 232 s'étendent entre le dispositif de dépilage 3 et le dispositif d'expansion 4.

Le système 1 comprend une lame de poussée 212 montée coulissante dans la gorge 231. La lame 212 est fixée sur un étrier 213 par l'intermédiaire d'une vis de fixation 214. Un capteur de mesure d'efforts 221 est interposé entre l'étrier 213 et un composant 211 du dispositif d'entraînement. Le capteur de mesure d'efforts 221 solidarise l'étrier 213 au composant 211. Le capteur de mesure d'efforts 221 mesure les efforts d'entraînement du segment 6 selon la direction de coulissement de ce segment 6 à l'intérieur du guide 2. Le capteur de mesure d'efforts 221 est connecté à un contrôleur 7 auquel il fournit la valeur d'effort instantanée mesurée. Le composant 211 est entraîné en translation par le chariot 202 et entraîne ainsi la lame 212 et le segment 6 en translation le long du guide 2.

En l'occurrence, le guide 2 peut guider simultanément trois segments superposés en translation, la plupart des pistons des moteurs à combustion comportant trois segments. Le guide 2 comporte ainsi trois gorges 231 superposées et destinées à guider un segment respectif en translation. Une lame 212 est montée coulissante dans chacune des gorges 231. Une gorge 232 est accolée à chacune des gorges 231 pour permettre le coulissement d'un composant du dispositif d'entraînement. L'association d'une gorge 231 et d'une gorge 232 forme par exemple une section en forme de T. Le dispositif de dépilage 3 est configuré pour introduire un segment dans chacune des gorges 231, avant que ce segment 6 ne soit entraîné vers le dispositif d'expansion 4 par une lame 212. Un capteur de mesure d'effort 221 dédié est interposé entre chaque lame 212 et le chariot 202. Ainsi, l'effort d'entraînement de chacun des segments 6 guidés dans le guide 2 peut être déterminé par le contrôleur 7.

La figure 4 est une vue en perspective d'une structure de fixation des lames sur le chariot 202 particulièrement compacte. Dans cette structure, les lames 212a, 212b et 212c (dont seule une portion est illustrée dans un but de lisibilité) sont fixées au chariot 202 de façon étagée. Ainsi, la lame 212a est fixée au chariot 202 par l'intermédiaire de trois capteurs 221 a, 221 b et 221 c, la lame 212b est fixée au chariot 202 par l'intermédiaire de deux capteurs 221 b et 221c.

En pratique, la lame 212a est fixée sur l'étrier 213a par l'intermédiaire d'une vis de fixation 214a. L'étrier 213a est fixé au composant 211a par intermédiaire du capteur 221a. La lame 212b et le composant 211a sont fixés sur l'étrier 213b par l'intermédiaire d'une vis de fixation 214b. L'étrier 213b est fixé au composant 211b par intermédiaire du capteur 221 b. La lame 212c et le composant 211 b sont fixés sur l'étrier 213c par l'intermédiaire d'une vis de fixation 214c. L'étrier 213c est fixé à l'extrémité supérieure du chariot 202 par intermédiaire du capteur 221 c. Ainsi, la structure de la lame 212c est utilisée pour relier les autres lames au chariot 202 et ainsi obtenir une structure d'entraînement particulièrement compacte.

Le contrôleur 7 détermine l'effort d'entraînement pour chacune des lames 212a, 212b et 212c. Dans l'exemple illustré à la figure 4, le contrôleur 7 détermine l'effort d'entraînement de la lame 212c en retranchant la mesure du capteur 221 b à la mesure du capteur 221 c. Le contrôleur 7 détermine l'effort d'entraînement de la lame 212b en retranchant la mesure du capteur 221 a à la mesure du capteur 221 b. Le contrôleur 7 peut interrompre l'entraînement des segments 6 lorsque l'un des efforts d'entraînement déterminés dépasse un seuil prédéterminé. Le contrôleur 7 peut également interrompre l'entraînement des segments 6 lorsqu'une augmentation anormalement rapide des efforts d'entraînement est déterminée.

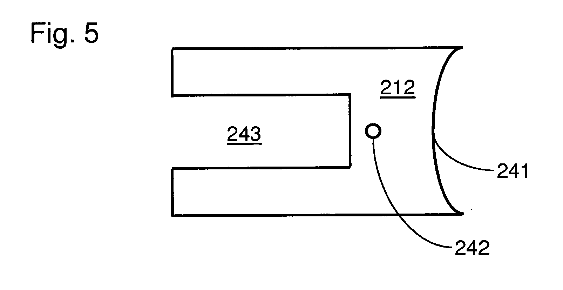

La figure 5 est une vue de dessus d'un exemple de lame 212. La lame 212 comporte une face d'entraînement 241 de forme arrondie, destinée à présenter une surface de contact maximale avec un segment 6. La lame 212 comporte un alésage 242 pour la fixation à une vis 214. La lame 212 comporte par ailleurs une rainure 243 dans sa partie arrière, destinée à être traversée par un composant 211 ou par l'extrémité supérieure du chariot 202.

## Revendications

1. Système de mise en place de segments (1) sur un piston comprenant :
- un dispositif de dépilage de segments ;
- un dispositif d'expansion du diamètre interne de segments ;
- un guide (231) configuré pour guider un segment en translation entre le dispositif de dépilage et le dispositif d'expansion ;
- un dispositif d'entraînement (211) configuré pour entraîner un segment dans le guide entre le dispositif de dépilage et le dispositif d'expansion, **caractérisé en ce qu'**il comprend aussi :
- un capteur de mesure (221) de l'effort d'entraînement d'un segment par le dispositif d'entraînement ;
- un contrôleur (7) configuré pour interrompre sélectivement l'entraînement du segment par le dispositif d'entraînement en fonction de l'effort d'entraînement mesuré par le capteur de mesure.

2. Système selon la revendication 1, dans lequel le dispositif d'entraînement comprend un moteur électrique (201) et un support (202) entraîné en translation par rapport au guide (2) par le moteur électrique.

3. Système selon la revendication 1 ou 2, dans lequel le dispositif d'entraînement comprend un support (202) entraîné en translation par rapport au guide et une lame de poussée (212) de segment entraînée en translation dans le guide par le support, le capteur de mesure de l'effort d'entraînement étant interposé entre la lame de poussée et le support pour mesurer l'effort d'entraînement selon la direction de guidage en translation du guide.

4. Système selon l'une quelconque des revendications 1 à 3, dans lequel le guide (2) comporte une gorge (231) de coulissement d'un segment (6), et comporte une gorge (232) de coulissement du support accolée à la gorge de coulissement du segment, lesdites gorges s'étendant entre le dispositif de dépilage et le dispositif d'expansion.

5. Système selon les revendications 3 et 4, dans lequel la lame de poussée (212) est montée coulissante dans la gorge (231) de coulissement du segment.

6. Système selon la revendication 4 ou 5, dans lequel le dispositif de dépilage (3) est configuré pour introduire un segment dans ladite gorge.

7. Système selon l'une quelconque des revendications 4 à 6, dans lequel le guide (2) comporte :
- au moins deux gorges superposées et destinées à guider en translation des segments respectifs ;
- au moins deux gorges de coulissement du support, chacune accolée à une gorge de coulissement de segment respective ;
- au moins deux lames de poussée (212a, 212b) montées coulissantes dans une gorge de coulissement d'un segment respective ;
- au moins deux capteurs de mesure de l'effort d'entraînement (221 a, 221 b) interposés entre une lame de poussée respective et le support selon la direction de guidage en translation du guide.

8. Système selon la revendication 7, dans lequel une desdites lames (212a) est fixée sur le support par l'intermédiaire d'au moins deux desdits capteurs de mesure (221 a, 222b).

9. Système selon l'une quelconque des revendications précédentes, dans lequel le contrôleur (7) interrompt l'entraînement par le dispositif d'entraînement (201) lorsque l'effort d'entraînement mesuré dépasse un seuil prédéterminé.

## Patentansprüche

1. Einbausystem von Segmenten (1) auf einem Kolben, das Folgendes aufweist:
- eine Entstapelungsvorrichtung von Segmenten,
- eine Expansionsvorrichtung des Innendurchmessers von Segmenten,
- eine Führung (231), die konfiguriert ist, um ein Segment in Verschiebung zwischen der Entstapelungsvorrichtung und der Expansionsvorrichtung zu führen,
- eine Antriebsvorrichtung (211), die konfiguriert ist, um ein Segment in der Führung zwischen der Entstapelungsvorrichtung und der Expansionsvorrichtung anzutreiben, **dadurch gekennzeichnet, dass** es ferner auch Folgendes aufweist:
- einen Sensor (221) zum Messen der Antriebskraft eines Segments durch die Antriebsvorrichtung,
- eine Steuervorrichtung (7), die konfiguriert ist, um das Antreiben des Segments durch die Antriebsvorrichtung selektiv in Abhängigkeit von der von dem Messsensor gemessenen Antriebskraft zu unterbrechen.

2. System nach Anspruch 1, bei dem die Antriebsvorrichtung einen Elektromotor (201) und einen Träger (202) aufweist, der in Verschiebung in Bezug auf die Führung (2) von dem Elektromotor angetrieben ist.

3. System nach Anspruch 1 oder 2, bei dem die Antriebsvorrichtung einen Träger (202) aufweist, der in Verschiebung in Bezug auf die Führung angetrieben ist, und eine Segmentschubklinge (212), die in Verschiebung in der Führung von dem Träger angetrieben ist, wobei der Messsensor der Antriebskraft zwischen die Schubklinge und den Träger eingefügt ist, um die Antriebskraft entlang der Richtung in Verschiebung der Führung zu messen.

4. System nach einem der Ansprüche 1 bis 3, bei dem die Führung (2) eine Gleithohlkehle (231) eines Segments (6) aufweist, und eine Gleithohlkehle (232) des Trägers, die an die Gleithohlkehle des Segments angebaut ist, aufweist, wobei sich die Hohlkehlen zwischen der Entstapelungsvorrichtung und der Expansionsvorrichtung erstrecken.

5. System nach den Ansprüchen 3 und 4, bei dem die Schubklinge (212) in der Gleithohlkehle (231) des Segments gleitend montiert ist.

6. System nach Anspruch 4 oder 5, bei dem die Entstapelungsvorrichtung (3) konfiguriert ist, um ein Segment in die Hohlkehle einzuführen.

7. System nach einem der Ansprüche 4 bis 6, bei dem die Führung (2) Folgendes aufweist:
- mindestens zwei übereinander liegende Hohlkehlen, die dazu bestimmt sind, jeweilige Segmente in Verschiebung zu führen,
- mindestens zwei Gleithohlkehlen des Trägers, die jeweils an eine jeweilige Segmentgleithohlkehle angebaut sind,
- mindestens zwei Schubklingen (212a, 212b), die in einer Gleithohlkehle eines jeweiligen Segments gleitend montiert sind,
- mindestens zwei Sensoren zum Messen der Antriebskraft (221a, 221b), die zwischen eine jeweilige Schubklinge und den Träger entlang der Führungsrichtung in Verschiebung der Führung eingefügt sind.

8. System nach Anspruch 7, bei dem eine der Klingen (212a) an dem Träger über mindestens zwei der Messsensoren (221a, 222b) befestigt ist.

9. System nach einem der vorhergehenden Ansprüche, bei dem die Steuervorrichtung (7) den Antrieb durch die Antriebsvorrichtung (201) unterbricht, wenn die gemessene Antriebskraft einen vorbestimmten Schwellenwert überschreitet.

## Claims

1. A system for placing segments (1) on a piston including:
- a device for unstacking of segments;
- a device for expansion of the internal diameter of segments;
- a guide (231) configured to guide a segment in translation between the unstacking device and the expansion device;
- a drive device (211) configured to drive a segment in the guide between the unstacking device and the expansion device, **characterized in that** it also includes:
- a measuring sensor (221) of the drive force of a segment by the drive device;
- a controller (7) configured to interrupt selectively the driving of the segment by the drive device as a function of the drive force measured by the measuring sensor.

2. The system according to claim 1, in which the drive device includes an electric motor (201) and a support (202) driven in translation with respect to the guide (2) by the electric motor.

3. The system according to claim 1 or 2, in which the drive device includes a support (202) driven in translation with respect to the guide and a segment push blade (212) driven in translation in the guide by the support, the measuring sensor of the drive force being interposed between the push blade and the support to measure the drive force along the direction of guiding in translation of the guide.

4. The system according to any one of claims 1 to 3, in which the guide (2) comprises a sliding groove (231) of a segment (6), and comprises a sliding groove (232) of the support coupled to the sliding groove of the segment, the said grooves extending between the unstacking device and the expansion device.

5. The system according to claims 3 and 4, in which the push blade (212) is slidably mounted in the sliding groove (231) of the segment.

6. The system according to claim 4 or 5, in which the unstacking device (3) is configured for introducing a segment in the said groove.

7. The system according to any one of claims 4 to 6, in which the guide (2) comprises:
- at least two grooves which are superimposed and intended to guide respective segments in translation;
- at least two sliding grooves of the support, each coupled to a respective segment sliding groove;
- at least two push blades (212a, 212b) slidably mounted in a respective sliding groove of a segment;
- at least two measuring sensors of the drive force (221a, 221b) interposed between a respective push blade and the support along the direction of guiding in translation of the guide.

8. The system according to claim 7, in which one of the said blades (212a) is fixed on the support by means of at least two of the said measuring sensors (221a, 222b).

9. The system according to any one of the preceding claims, in which the controller (7) interrupts the driving by the drive device (201) when the measured drive force exceeds a predetermined threshold.
